# EUROPÄISCHE PATENTSCHRIFT

(11) **EP 2 770 016 B1**
(45) Veröffentlichungstag und Bekanntmachung des Hinweises auf die Patenterteilung: **11.05.2022**
(21) Anmeldenummer: 13006041.1
(22) Anmeldetag: 20.12.2013
(51) Int. Cl.: C08J 11/18, C08L 23/04

(54) **VERFAHREN ZUR AUFBEREITUNG VON RECYCELTEM HDPE**
METHOD FOR THE TREATMENT OF RECYCLED HDPE
PROCÉDÉ DE PRÉPARATION DE POLYÉTHYLÈNE HDPE RECYCLÉ

(30) Priorität: 21.12.2012 DE 102012025258
(43) Veröffentlichungstag der Anmeldung: 27.08.2014
(73) Patentinhaber: Interseroh Dienstleistungs GmbH, 51149 Köln (DE)
(72) Erfinder: ULCNIK-KRUMP, Manica, 2000 Maribor (SI)
(74) Vertreter: Laufhütte, Dieter

(56) Entgegenhaltungen:
- EP-A1- 1 146 077
- WO-A1-2011/092476
- US-A- 5 895 790

## Beschreibung

Die Erfindung betrifft ein Verfahren zur Herstellung eines aufbereiteten Kunststoffmaterials aus einem gebrauchten Kunststoffmaterial mit einem Anteil von mindestens 80 Gew.-% High-Density Polyethylen (HDPE).

Gebrauchtes HDPE aus gemischten kommunalen Abfallströmen (mixed municipal waste streams, MWS) unbekannter Herkunft weist auch nach dessen Reinigung mittels Schmelzfiltration für einige Anwendungen unzureichende Eigenschaften auf. Daher ist es wünschenswert, dieses Material so zu modifizieren, dass es spezifische und exakt definierte Eigenschaften aufweist, die zumindest in manchen Aspekten mit den Eigenschaften von Neumaterial vergleichbar sind. Mit Blick auf die gewöhnlichen Anwendungen von HDPE kann dies insbesondere im Hinblick auf die spezifischen Qualitätsanforderungen für das Blasformen von Flaschen und Behältern geschehen.

Da gebrauchtes HDPE aus MWS typischerweise einer Schmelzfiltration unterzogen wird, wird im Rahmen der vorliegenden Erfidung überlegt, einer Kunststoffschmelze im Rahmen dieses bestehenden Prozessen Zusatzstoffe beizugeben. In diesem Zusammenhang ist die Rezepturentwicklung für geeignete Zusatzstoffe ein wichtiger Aspekt, und hängt von der Qualität des Ausgangsmaterials und von den

Anforderungen an das aufbereitete Material ab.

US 2004/235970 A1 offenbart ein Verfahren zum Recyclen von Abfällen enthaltend 70 Gew.-% Plastik.

WO 2011/092476 A1 offenbart ein Verfahren zur Herstellung eines stabilisierten und damit aufbereitetem Kunststoffmaterial ausgehend von HDPE, wobei zu einem HDPE ein Peroxid und sowohl ein sterisch gehindertes Phenol als auch ein sterisch gehindertes Amin.

Die Erfindung betrifft ein Verfahren zur Herstellung eines aufbereiteten Kunststoffmaterials aus einem Ausgangsmaterial, wobei es sich bei dem Ausgangsmaterial um gebrauchtes Kunststoffmaterial mit einem Anteil von mindestens 80 Gew.-% HDPE handelt. Das Verfahren weist die in Anspruch 1 definierten Schritte auf.

Das erfindungsgemäße Verfahren kann im Rahmen einer Schrittkombination aus Schmelzfiltration und der in Schritt (b) definierten Aufbereitung durchgeführt werden. In einer Ausführungsform wird das aufbereitete Kunststoffmaterial für seine weitere Anwendung mit neuem Kunststoffmaterial vermengt. Dies kann im Rahmen einer solchen Schrittkombination erfolgen und/oder nach der chemischen Extrusion erfolgen.

In einer Ausführungsform handelt es sich bei dem Ausgangsmaterial um Post-Consumer Waste, insbesondere um Haushalts- und/oder Verpackungsabfälle. Das Ausgangsmaterial kann einen Anteil von mindestens 95 Gew.-% und vorzugsweise von mindestens 98 Gew.-% HDPE aufweisen. Der Anteil an Polyolefinen kann bis zu maximal 99,8 Gew.-% betragen. In einer Ausführungsform wird das Ausgangsmaterial vorbehandelt und/oder sortiert und/oder gereinigt wurde und/oder hat bereits eine Schmeltfiltration durchlaufen. Typische Eigenschaften von durch Schmelzfiltration gereinigtem und ansonsten unbehandeltem Post-Consumer HDPE aus Haushaltsabfällen und Verpackungsabfällen (mixed municipal waste streams MWS) sind in Tabelle 1 dargestellt.

**Tabelle 1**

| | **Einheit** | **Messmethode** | **Ausgangsmaterial** |
|---|---|---|---|
| Schmelzflussrate | g/10min | ISO 1133 (230°C; 2,16 kg Last) | 1,8 ± 0,7 |
| Elastizitätsmodul | MPa | ISO 527 | > 1 |
| Zugspannung (Fließgrenze) | | ISO 527 (50 mm/min) | 0,95 ± 0,01 |
| Dichte | g/cm³ | ISO 1183 | > 23 |
| Aschegehalt | % | 650°C/15min | > 700 |

In einer Ausführungsform handelt es sich bei dem erfindungsgemäßen Verfahren um ein solches zur Herstellung eines Kunststoffartikels, der aus dem aufbereiteten Kuststoffmaterial besteht oder dieses umfasst. Bei diesem Kunststoffartikel kann es sich um eine Kunststoffflasche handeln, wie beispielsweise eine Getränkeflasche für die Lebensmittelindustrie, einen Container bzw. eine Flasche für industrielle Chemikalien und Haushaltschemikalien wie Reinigungsmittel, Waschmittel, Motoröl und dergleichen. Bei dem Kunststoffartikel kann es sich auch um ein Rohr bzw. eine Leitung handeln. Der Artikel kann aus dem aufbereiteten Kunststoffmaterial bestehen oder dieses aufweisen, beispielsweise als Komponente einer Kunststoffmischung.

In einer Ausführungsform umfasst das Verfahren ferner einen Schritt (c) des Blasformens des aufbereiteten Kunststoffmaterials. In diesem Zusammenhang sind ein Extrusionsblasformen, ein Spritzblasformen und ein Tauchblasformen denkbar.

Schritt (b) der Aufbereitung des Ausgangsmaterials kann in einer Ausführungsform wenigstens teilweise im Rahmen einer Schmelzextrusion des Ausgangsmaterials durchgeführt werden. Dabei wird das Ausgangsmaterial geschmolzen, die chemische Verbindung und gegebenenfalls die Elastomere und/oder Füllmaterialien sequenziell oder gleichzeitig zugegeben, die resultierende Schmelze durchmischt wird und das Ausgangsmaterial mit der chemischen Verbindung zur Reaktion gebracht. Dieser Vorgang kann in einem Doppelschneckenextruder als kontinuierlicher Reaktor durchgeführt werden. In einer Ausführungsform erfolgt im Rahmen dieses Vorgangs eine Homogensisierung der Schmelze und aller Zusatzstoffe.

In einer Ausführungsform beträgt die Temperatur während Schritt (b) der Aufbereitung des Ausgangsmaterials zwischen 120°C und 160°C, vorzugsweise zwischen 130°C und 150°C.

In einer Ausführungsform umfassen die in Schritt (a) bestimmten physikalischen Eigenschaften rheologische Eigenschaften, insbesondere die Schmelzflussrate. Ein geeigneter Bereich für die als Zieleigenschaft festgelegte Schmelzflussrate liegt je nach Anwendung zwischen 0,5 und 1,5 g/10min nach ISO 1133 bei 230°C und 2,16kg Last.

In einer Ausführungsform umfassen die in Schritt (a) bestimmten physikalischen Eigenschaften mechanische Eigenschaften, insbesondere das Elastizitätsmodul und/oder die Schlagzähigkeit. Ein geeigneter Bereich für das als Zieleigenschaft festgelegte Elastizitätsmodul liegt je nach Anwendung zwischen 500 und 1000 MPa, und vorzugsweise zwischen 700 und 1000 MPa nach ISO 527 bei 50 mm/min. Ein geeigneter Bereich für die als Zieleigenschaft festgelegte Schlagzähigkeit liegt je nach Anwendung zwischen 30 und 100 kJ/m² bei 23°C und zwischen 5 und 20 kJ/m² bei -30°C nach ISO 180/1A.

In einer Ausführungsform umfassen die in Schritt (a) bestimmten physikalischen Eigenschaften thermische Eigenschaften, insbesondere die Wärmeformbeständigkeit. Ein geeigneter Bereich für die als Zieleigenschaft festgelegte Wärmeformbeständigkeit liegt je nach Anwendung zwischen 50 und 70 °C bei 1,8 Mpa nach ISO 75-2.

In einer Ausführungsform umfasst Schritt (b) der Aufbereitung des Ausgangsmaterials die Zugabe wenigstens eines Radikalstarters, vorzugsweise eines organischen Peroxids. Beispielsweise können organische Peroxide mit zwei homolytisch spaltbaren Bindungen verwendet werden. Vorzugsweise soll der Radikalstarter thermisch spaltbar sein. Geeignete Radikalstarter haben beispielsweise eine molare Masse von zwischen 200 und 500 g/mol. Geeignete Peroxide fallen beispielsweise unter die Definition der Formel A(CR₂-O-O-CR₃)ₙ, wobei A ein monovalentes, divalentes oder polyvalentes, lineares oder verzweigtes, gesättigtes oder ungesättigtes C₁ bis C₂₀, vorzugsweise C₂ bis C₁₀ Alkyl, C₆ bis C₂₀ Aryl oder Alkaryl ist, wobei n 1 bis 5 ist, und wobei R ein C₁ bis C₁₀, vorzugsweise ein C₁ bis C₄ lineares oder verzweigtes Alkyl, wie beispielsweise Methyl oder Ethyl ist. In einer Ausführungsform kann der Wert für n 1 betragen. In einer anderen Ausführungsform kann der Wert für n 2 betragen, was einem Diperoxid entsprechen würde. Ein geeignetes organisches Peroxid ist 2,5-Dimethyl-2,5-di(tert-butylperoxy)hexan (Dicumylperoxid) mit der chemischen Formel:

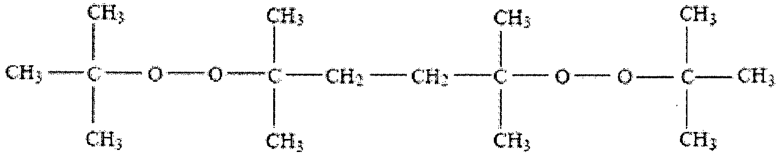

In einer Ausführungsform werden als Radikalstarter ein Dialkylperoxid und/oder ein Peroxid vom Peroxyketaltyp verwendet, entweder für sich oder in Kombination.

Die Zugabe und Reaktion des Radikalstarters wird vorzugsweise im Schmelzzustand durchgeführt. Vorzugsweise wird eine Wärmedegradation des Peroxids bewirkt, was zur Bildung von aktiven freien Radikalen führt. Vorzugsweise werden solche Radikalstarter verwendet, die bei einer Temperatur von 120°C eine Halbwertszeit von zwischen 5 und 15 Stunden aufweisen, oder bei einer Temperatur von 140°C eine Temperatur von zwischen 30 Minuten und 2 Stunden aufweisen, oder bei einer Temperatur von 180°C eine Halbwertszeit von zwischen 30 Sekunden und 5 Minuten aufweisen.

Geeignete Zugabemengen für den Radikalstarter umfassen weniger als 1 Gew.-%, vorzugsweise weniger als 0,5 Gew.-% bzw. mehr als 0.01 Gew.-%, vorzugsweise mehr als 0.05 Gew.-% gemessen an der Masse des Ausgangsmaterials.

Durch die Zugabe des Radikalstarters können rheologische Eigenschaften modifiziert werden. Der Grad der Langkettenverzweigung, die relative Molekülmasse und die Breite der Verteilung der relativen Molekülmassen kann gesteigert werden. Ferner wurde beim Einsatz geringer Mengen eine synergetische Verbesserung der Zieleigenschaften beobachtet. Die als bevorzugt genannten Peroxide haben eine besonders geeignete Reaktivität für die Verwendung in einem erfindungsgemäßen Verfahren.

In einer Ausführungsform umfasst Schritt (b) der Aufbereitung des Ausgangsmaterials die Zugabe wenigstens eines Stabilisierungsmittels, vorzugsweise eines sterisch gehinderten Phenols und/oder Amins. Beispiele umfassen Copolymere von Bicarbonsäuren und Aminoalkoholen. Der Polymerisierungsgrad dieser Copolymere kann beispielsweise so groß sein, dass zwischen 5 und 50, und vorzugsweise zwischen 10 und 20 Einheiten beider Monomere in dem Stabilisierungsmittel vorhanden sind. Geeignete Dicarbonsäuren für die Verwendung in einem derartigen Polymer haben beispielsweise die Formel HOOC-R^{A}-COOH, wobei R^{A} ein C₁ bis C₁₀, vorzugsweise ein C₁ bis C₄ lineares oder verzweigtes Alkyl ist, das gegebenenfalls ungesättigte Stellen und/oder Substituenten ausgewählt aus der Gruppe der Halogene, Hydroxide, Amine oder dergleichen aufweist. Geeignete Aminoalkohole zur Verwendung in einem derartigen Copolymer umfassen beispielsweise sekundäre oder vorzugsweise tertiäre Amine mit wenigstns zwei Alkanolsubstituenten. Diese können der Formel NR¹R²R³ entsprechen, wobei R¹ H oder ein C₁ bis C₁₀, vorzugszweise C₂ bis C₆ lineares oder verzweigtes Alkyl ist, das gegebenenfalls ungesättigte Stellen oder Substituenten ausgewählt aus der Gruppe Halogene, Hydroxide, Amine oder dergleichen aufweist, und wobei R² und R³ individuell ein C₁ bis C₁₀, vorzugsweise C₂ bis C₆ lineares oder verzweigtes Alkyl ist, das gegebenenfalls ungesättigte Stellen und das wenigstens eine Hydroxylgruppe aufweist. R₁ und R₂ können gemeinsam mit dem Stickstoffatom einen fünf- oder sechsgliedrigen Ring bilden, der wenigstens eine Hydroxy-Gruppe aufweist. Ein insbesondere geeignetes Copolymer kann mit der Formel 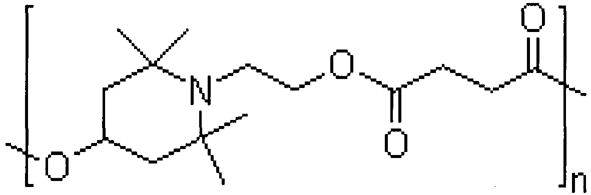 dargestellt werden, wobei n 5 bis 50 und vorzugsweise 10 bis 20 ist.

Geeignete Zugabemengen für das Stabilisierungsmittel umfassen weniger als 1 Gew.-%, vorzugsweise weniger als 0,5 Gew.-% bzw. mehr als 0.01 Gew.-%, vorzugsweise mehr als 0.05 Gew.-% gemessen an der Masse des Ausgangsmaterials.

In einer Ausführungsform umfasst Schritt (b) der Aufbereitung des Ausgangsmaterials die Zugabe wenigstens eines Nukleierungsmittels, vorzugsweise eines organischen Salzes. Das Nukleierungsmittel liegt in Form eines kristallinen oder teilkristallinen Festkörpers vor, der beispielsweise eine rechteckige und flache Morphologie aufweisen kann. Diese wirken als Keimbildner und begünstigen und regulieren die Kristallisation der Polymere aus der Schmelze.

Geeignete Zugabemengen für das Nukleierungsmittel umfassen weniger als 3 Gew.-% bzw. mehr als 1 Gew.-% gemessen an der Masse des Ausgangsmaterials.

In einer Ausführungsform umfasst Schritt (b) der Aufbereitung des Ausgangsmaterials die Zugabe wenigstens eines Elastomers. Elastomere können Einfluss auf bestimmte mechanische Eigenschaften wie die Schlagzähigkeit insbesondere bei niederen Temperaturen nehmen. In einer Ausführungsform handelt es sich bei dem zugesetzten Elastomer um ein gummiartiges Polymer, insbesondere Kautschuk. Das Elastomer kann ein Copolymer auf Basis von Butadien und/oder Styrol und/oder Isopren sein. Geeignet sind unter anderem Ethylen-Alpha-Olefin-Copolymere, beispielsweise Ethylen-Okten-Copolymere. In einer Ausführungsform werden Elastomere in Form kleiner Partikel eingemischt, z.B. solche mit einer durchschnittlichen Teilchengröße von zwischen etwa 1 und etwa 1000 µm aufweisen.

Geeignete Zugabemengen für das Elastomer umfassen weniger als 15 Gew.-%, vorzugsweise weniger als 10 Gew.-%, bzw. mehr als 3 Gew.-%, vorzugsweise mehr als 5 Gew.-% gemessen an der Masse des Ausgangsmaterials.

Im Rahmen der in Schritt (b) definierten Aufbereitung erfährt das Ausgangsmaterial eine Restabilisierung und/oder eine Wiederherstellung der Molekularstruktur und/oder eine allgemeine chemische Modifikation. Dabei erfolgt eine Aufwertung einer oder mehrerer physikalischer Eigenschaften des Ausgangsmaterials mit dem Ziel, das aufbereitete Material für ausgewählte weitere Verarbeitungsverfahren und Anwendungen tauglich zu machen. Die Aufbereitung kann eine Aufwertung der Molekülstruktur und/oder der Phasenmorphologie und/oder der mechanischen Eigenschaften der Kunststoffabfallströme bewirken, und kann verschiedene Ansätze und Strategien der chemischen Behandlung umfassen, wie beispielsweise eine Restabilisierung und/oder einen Wiederaufbau der makromolekularen Architektur und/oder eine Kompatibilisierung von Mischbestandteilen und/oder eine Zugabe von Elastomeren und Füllstoffen.

Eine Besonderheit des erfindungsgemäßen Verfahrens ist sein produktorientierter Ansatz, wobei zunächst eine Festlegung einer oder mehrerer physikalischer Zieleigenschaften erfolgt, und basierend darauf unter Einbeziehung der korrespondierenden Ausgangseigenschaften geeignete Zusatzstoffe wie chemische Verbindungen, Elastomere oder Füllstoffe ausgewählt werden.

Weitere Einzelheiten und Vorteile der Erfindung ergeben sich aus den nachfolgend dargestellten Ausführungsbeispielen.

Das nachfolgend dargestellte Aufbereitungsverfahren basiert auf gebrauchtem HDPE Material aus einem MWS, welches zunächst sortiert, zerkleinert und gereinigt wurde und anschließend eine Schmelzfiltration durchlaufen hat. Es weist einen Anteil von mehr als 98 Gew.-% HDPE auf und einen Anteil von über 99 Gew.-% an Polyolefinen. Chemische und physikalische Eigenschaften des Ausgangsmaterials sind in Tabelle 2 dargestellt.

**Tabelle 2**

| **Rheologische Eigenschaften** | **Einheit** | **Messmethode** | **Ausgangsmaterial** |
|---|---|---|---|
| Schmelzflussrate | g/10min | ISO 1133 bei 230°C und 2,16 kg Last | 1,60 |
| **Mechanische Eigenschaften** | | | |
| Elastizitätsmodul | MPa | ISO 527 | 850 |
| Zugspannung (Fließgrenze) | | ISO 527 bei 50 mm/min | 23 |
| Bruchdehnung | % | | 130 |
| Schlagzähigkeit IZOD bei 23 ± 2°C | kJ/m² | ISO 180/1A | 40 |
| Schlagzähigkeit IZOD bei -30 ± 2°C | | | 5 |
| Schlagzähigkeit Charpy bei 23 ± 2°C | | ISO 179/1eA | 40 |
| **Thermische Eigenschaften** | | | |
| Wärmeformbeständigkeit | °C | ISO 75-2 bei 1.8 MPa | 60 |
| Andere Eigenschaften | | | |
| Dichte | g/cm³ | ISO 1183 | 0.94 |
| Aschegehalt | % | 650°C/15min | 0.9 |
| Brom | | ppm | < 100 |
| Cadmium | | | < 100 |
| Chrom | | | < 100 |
| Quecksilber | | | < 100 |
| Blei | | | < 100 |

Dieses Ausgangsmaterial soll so aufbereitet werden, dass es sich zur Herstellung von Behältern mittels eines Blasformverfahrens eignet. Gewünschte physikalische Zieleigenschaften werden in Tabelle 3 dargestellt. Als Referenzmaterial diente ein kommerziell erhältliches HDPE Material, das industriell zur Herstellung von Behältern mittels eines Blasformverfahrens eingesetzt.

**Tabelle 3**

| **Rheologische Eigenschaften** | **Einheit** | **Messmethode** | **Minimalwert** | **Maximalwert** |
|---|---|---|---|---|
| Schmelzflussrate | g/10min | ISO 1133 | 0.5 ± 10% | 1.5 ± 10% |
| | | 230°C | | |
| | | 2,16 kg Last | | |
| **Mechanische Eigenschaften** | | | | |
| Elastizitätsmodul | MPa | ISO 527 | 500 ± 100 | 1000 ± 100 |
| Schlagzähigkeit IZOD bei 23 ± | kJ/m² | ISO 180/1A | 30 | 100 |
| 2°C | | | | |
| Schlagzähigkeit IZOD bei -30 ± | | | 5 | 20 |
| 2°C | | | | |
| Schlagzähigkeit Charpy bei 23 ± | | ISO 179/1eA | 30 | 100 |
| 2°C | | | | |
| **Thermische Eigenschaften** | | | | |
| Wärmeformbeständigkeit | °C | ISO 75-2 | 50 ± 5 | 70 ± 5 |
| | | 1.8 MPa | | |
| **Andere Eigenschaften** | | | | |
| Dichte | g/cm³ | ISO 1183 | 0.93 ± 0.02 | 0.98 ± 0.02 |
| Aschegehalt | % | 650°C/15min | >1 | <5 |
| Brom | ppm | | < 100 | |
| Cadmium | | | < 100 | |
| Chrom | | | < 100 | |
| Quecksilber | | | | < 100 |
| Blei | | | | < 100 |

Die Aufbereitung erfolgt im Rahmen einer direkt an die Schmelzfiltration folgende Schmelzextrusion in einem Doppelschneckenextruder als kontinuierlicher Reaktor bei einer Temperatur von 140°C. In drei verschiedenen Ausführungsbeispielen AB1 bis AB3 werden dem Ausgangsmaterial im Rahmen der Schmelzextrusion die in Tabelle 4 angeführten Zusatzmaterialien beigegeben.

**Tabelle 4**

| | **Ausgangsmaterial** | **Additiv** | | | |
|---|---|---|---|---|---|
| | Ausgangsmaterial | Addidiv A | Addidiv B | Addidiv C | Addidiv D |
| **AB1** | min. 98 Gew-% | 0,3 bis 0,5 Gew-% | max. 0,2 Gew-% | 2 Gew-% | |
| **AB2** | min. 90 Gew-% | 0,3 bis 0,5 Gew-% | max. 0,2 Gew-% | 2 Gew-% | 6 bis 8 Gew-% |
| **AB3** | min. 98 Gew-% | 0,3 bis 0,5 Gew-% | 0,5 Gew-% | 2 Gew-% | |

Addidiv A ist ein kommerziell erhältlicher Stabilisator. Addidiv B ist ein kommerziell erhältlicher Radikalstarter auf Basis von Dicumylperoxid, das eine molare Masse von 290 g/mol und einer Halbwertszeit von 1h bei 140°C aufweist. Addidiv C ist ein kommerziell erhältliches Nukleierungsmittel. Addidiv D ist eine kommerziell erhältliches Elastomer.

Im Rahmen der Schmelzextrusion wird das Ausgangsmaterial zunächst mit dem Radikalstarter zur Reaktion gebracht. Anschließend wird der Stabilisator zugegeben, und letztlich das Nukleierungsmittel und gegebenenfalls das Elastomer. Für jeden Zusatzstoff erfolgt eine Homogenisierung im Extruder. Das aufbereitete Kunststoffmaterial wird dann abgekühlt.

Für diese Ausführungsbeispiele werden die in Tabelle 5 dargestellten Zieleigenschaften erhalten.

**Tabelle 5**

| | **Einheit** | **Messmethode** | **AB1** | **AB2** | **AB3** | **Toleranzgrenze** |
|---|---|---|---|---|---|---|
| **Rheologische Eigenschaften** | | | | | | |
| Schmelz-flussrate | g/10min | ISO 1133 | 1,0 | 1,4 | 0,8 | ± 0,1 |
| | | 230°C | | | | |
| | | 2,16 kg Last | | | | |
| **Mechanische Eigenschaften** | | | | | | |
| Elastizitäts-modul | MPa | ISO 527 | 950 | 750 | 900 | ± 50 |
| Zugspannung | | ISO 527 bei 50 | 25 | 22 | 26 | ± 3 |
| (Fließgrenze) | | mm/min | | | | |
| Bruchdehnung | % | | 90 | 280 | 54 | ± 10 |
| Schlagzähigkeit IZOD | kJ/m² | ISO 180/1A | 50 | 70 | 35 | ± 5 |
| bei 23 ± 2°C | | | | | | |
| Schlagzähigkeit IZOD | | | 14 | 18 | 6 | ± 3 |
| bei -30 ± 2°C | | | | | | |
| Schlagzähigkeit | | ISO 179/1eA | 60 | 90 | 40 | ± 5 |
| Charpy bei 23 ± 2°C | | | | | | |
| **Thermische Eigenschaften** | | | | | | |
| Wärmeform- | °C | ISO 75-2 | 60 | 60 | 60 | ± 10 |
| beständigkeit | | 1.8 MPa | | | | |
| **Andere Eigenschaften** | | | | | | |
| Dichte | g/cm³ | ISO 1183 | 0,95 | 0,93 | 0,95 | ± 0.05 |
| Aschegehalt | % | 650°C/15min | 0,8 | 0,8 | 0,5 | ± 0.5 |
| Brom | ppm | | < 100 | < 100 | < 100 | < 100 |
| Cadmium | | | < 100 | < 100 | < 100 | < 100 |
| Chrom | | | < 100 | < 100 | < 100 | < 100 |
| Quecksilber | | | < 100 | < 100 | < 100 | < 100 |
| Blei | | | < 100 | < 100 | < 100 | < 100 |

Mit Hilfe des erfindungsgemäßen Verfahrens lassen sich also ausgewählte physikalische Eigenschaften des gebrauchten Kunststoffmaterials verbessern. Beispielsweise wird in AB1 ein hohes Elastizitätsmodul erreicht, in AB2 eine hohe Bruchdehnung und Schlagzähigkeit, und in AB3 eine hohe Zugspannung. Andere physikalische Eigenschaften, welche für eine spezifische Anwendung möglciherweise weniger bedeutsam sind, werden hingegen nicht verändert beziehungsweise es können sogar gewisse Einbußen in Kauf genommen werden.

Diese Zieleigenschaften sind insbesondere beim Einsatz von großen Mengen innerhalb der angegebenen Toleranzgrenze reproduzierbar. So ergibt sich, dass mit Hilfe eines erfindungsgemäßen Verfahrens die physikalischen Eigenschaften eines gebrauchten HDPE Materials für bestimmte Anwendungen optimiert werden können.

## Patentansprüche

1. Verfahren zur Herstellung eines aufbereiteten Kunststoffmaterials aus einem gebrauchten Kunststoffmaterial aus Haushalts- und/oder Verpackungsabfällen, das einen Anteil von mindestens 80 Gew.-% HDPE aufweist,
**dadurch gekennzeichnet,**
**dass** das Verfahren die folgenden Schritte aufweist:
(a) Bestimmung der Schmelzflussrate nach ISO 1133(230°C; 2.16 kg Last) und/oder der Schlagzähigkeit nach ISO 180/1A des gebrauchten Kunststoffmaterials;
(b) Aufbereitung des Ausgangsmaterials zur Veränderung der Schmelzflussrate und/oder der Schlagzähigkeit, wobei
(i) eine Veränderung der Schmelzflussrate durch Zugabe von 0,05 bis 0,5 Gew.-% eines organischen Peroxids herbeigeführt wird; und
(ii) eine Veränderung der Schlagzähigkeit durch Zusatz von 5 bis 10 Gew.-% eines Elastomers herbeigeführt wird;
wobei im Rahmen der Aufbereitung weiterhin 0,05 bis 0,5 Gew.-% eines Stabilisierungsmittels zugegeben werden, bei dem es sich um ein sterisch gehindertes Phenol oder Amin handelt; und
wobei Schritt (b) im Rahmen einer Schmelzextrusion des gebrauchten Kunststoffmaterials durchgeführt wird, wobei das gebrauchte Kunststoffmaterial geschmolzen wird, das Peroxid, das Elastomer und das Stabilisierungsmittel sequenziell zugegeben werden und die resultierende Schmelze durchmischt wird.

2. Verfahren nach Anspruch 1, **dadurch gekennzeichnet, dass** Schritt (b) ferner die Zugabe von Füllmaterialien zu der Schmelze des gebrauchten Kunststoffmaterials umfasst.

3. Verfahren nach einem der vorhergehenden Ansprüche, **dadurch gekennzeichnet, dass** es sich bei dem Elastomer um Kautschuk handelt.

4. Verfahren nach einem der vorhergehenden Ansprüche, **dadurch gekennzeichnet, dass** es sich bei dem Peroxid um 2,5-Dimethyl-2,5-di(tert-butylperoxy)hexan handelt.

5. Verfahren nach einem der vorhergehenden Ansprüche, **dadurch gekennzeichnet, dass** das gebrauchte Kunststoffmaterial einen Anteil von mindestens 95 Gew.-% und vorzugsweise von mindestens 98 Gew.-% HDPE aufweist.

6. Verfahren nach einem der vorhergehenden Ansprüche, **dadurch gekennzeichnet, dass** es sich bei dem gebrauchten Kunststoffmaterial um Post-Consumer Waste handelt, insbesondere um Haushalts- und/oder Verpackungsabfälle.

7. Verfahren zur Herstellung eines Kunststoffartikels umfassend die Bereitstellung eines aufbereiteten Kunststoffmaterials anhand eines Verfahrens nach einem der vorhergehenden Ansprüche, wobei es sich bei dem Kunststoffartikel vorzugsweise um eine Kunststoffflasche, ein Rohr oder eine Leitung handelt.

8. Verfahren nach Anspruch 7, **dadurch gekennzeichnet, dass** das Verfahren einen Schritt (c) des Blasformens des aufbereiteten Kunststoffmaterials aufweist.

## Claims

1. Method for producing a regenerated plastics material from a used plastics material made up of domestic and/or packaging waste, which comprises a proportion of at least 80 wt.% of HDPE,
**characterised in that**
the method comprises the following steps:
(a) determining the melt flow rate in accordance with ISO 1133 (230°C; 2.16 kg load) and/or the impact toughness in accordance with ISO 180/1A of the used plastics material;
(b) regenerating the starting material to change the melt flow rate and/or the impact toughness, wherein
(i) a change to the melt flow rate is brought about by adding 0.05 to 0.5 wt.% of an organic peroxide; and
(ii) a change to the impact toughness is brought about by adding 5 to 10 wt.% of an elastomer;
wherein, as part of the regeneration process, 0.05 to 0.5 wt.% of a stabiliser is also added, which is a sterically hindered phenol or amine; and
wherein step (b) is carried out as part of melt extrusion of the used plastics material, wherein the used plastics material is melted, the peroxide, the elastomer and the stabiliser are sequentially added, and the resulting melt is thoroughly mixed.

2. Method according to claim 1, **characterised in that** step (b) further comprises adding filler materials to the melt of the used plastics material.

3. Method according to any of the preceding claims, **characterised in that** the elastomer is rubber.

4. Method according to any of the preceding claims, **characterised in that** the peroxide is 2,5-dimethyl-2,5-di-(tert-butylperoxy)hexane.

5. Method according to any of the preceding claims, **characterised in that** the used plastics material has a proportion of at least 95 wt.% and preferably of at least 98 wt.% HDPE.

6. Method according to any of the preceding claims, **characterised in that** the used plastics material is post-consumer waste, in particular domestic and/or packaging waste.

7. Method for producing a plastics article comprising providing a regenerated plastics material using a method according to any of the preceding claims, wherein the plastics article is preferably a plastics bottle, a tube or a pipe.

8. Method according to claim 7, **characterised in that** the method comprises a step (c) of blow-moulding the regenerated plastics material.

## Revendications

1. Procédé de fabrication d'un matériau en matière plastique préparé à partir d'un matériau de matière plastique usagé issu de déchets ménagers et/ou de déchets d'emballage, qui présente une fraction d'au moins 80 % en poids de PEHD,
**caractérisé en ce**
**que** le procédé présente les étapes suivantes :
(a) la définition de l'indice de fluidité à chaud selon la norme ISO 1133 (230 °C ; 2,16 kg de charge) et/ou de la résilience selon la norme ISO 180/1A du matériau en matière plastique usagé ;
(b) la préparation du matériau de départ pour modifier l'indice de fluidité à chaud et/ou la résilience, dans lequel
(i) une modification de l'indice de fluidité à chaud est provoquée par ajout de 0,05 à 0,5 % en poids d'un peroxyde organique ; et
(ii) une modification de la résilience est provoquée par ajout de 5 à 10 % en poids d'un élastomère ;
dans lequel par ailleurs 0,05 à 0,5 % en poids d'un agent de stabilisation sont ajoutés dans le cadre de la préparation, lequel est un phénol ou une amine stériquement encombré(e) ; et
dans lequel l'étape (b) est mise en œuvre dans le cadre d'une extrusion par fusion du matériau en matière plastique usagé, dans lequel le matériau en matière plastique usagé est fondu, le peroxyde, l'élastomère et l'agent de stabilisation sont ajoutés de manière séquentielle et la matière fondue en résultant est mélangée.

2. Procédé selon la revendication 1, **caractérisé en ce que** l'étape (b) comprend en outre l'ajout de matériaux de remplissage à la matière fondue du matériau en matière plastique usagé.

3. Procédé selon l'une quelconque des revendications précédentes, **caractérisé en ce que** l'élastomère est du caoutchouc.

4. Procédé selon l'une quelconque des revendications précédentes, **caractérisé en ce que** le peroxyde est du 2,5-diméthyl-2,5-di(tert-buytlperoxy)hexane.

5. Procédé selon l'une quelconque des revendications précédentes, **caractérisé en ce que** le matériau en matière plastique usagé présente une fraction d'au moins 95 % en poids et de préférence d'au moins 98 % en poids de PEHD.

6. Procédé selon l'une quelconque des revendications précédentes, **caractérisé en ce que** le matériau en matière plastique usagé est un déchet de post-consommation, en particulier est des déchets ménagers et/ou des déchets d'emballage.

7. Procédé de fabrication d'un article en matière plastique, comprenant la fourniture d'un matériau en matière plastique préparé à l'aide d'un procédé selon l'une quelconque des revendications précédentes, dans lequel l'article en matière plastique est de préférence une bouteille en matière plastique, un tuyau ou un conduit.

8. Procédé selon la revendication 7, **caractérisé en ce que** le procédé présente une étape (c) du moulage par soufflage du matériau en matière plastique préparé.
